# EUROPÄISCHE PATENTSCHRIFT

(11) **EP 2 817 682 B1**
(45) Veröffentlichungstag und Bekanntmachung des Hinweises auf die Patenterteilung: **29.04.2020**
(21) Anmeldenummer: 13707134.6
(22) Anmeldetag: 19.02.2013
(51) Int. Cl.: G05B 19/042, G06F 11/20

(54) **VERFAHREN ZUM AUSFALLSICHEREN BETREIBEN EINES PROZESSSTEUERSYSTEMS MIT REDUNDANTEN STEUEREINRICHTUNGEN**
METHOD FOR THE FAILSAFE OPERATION OF A PROCESS CONTROL SYSTEM WITH REDUNDANT CONTROL DEVICES
PROCÉDÉ PERMETTANT UN FONCTIONNEMENT À SÉCURITÉ INTÉGRÉE D'UN SYSTÈME DE COMMANDE DE PROCESSUS À L'AIDE DE DISPOSITIFS DE COMMANDE REDONDANTS

(30) Priorität: 20.02.2012 DE 102012003242
(43) Veröffentlichungstag der Anmeldung: 31.12.2014
(73) Patentinhaber: Phoenix Contact GmbH & Co. KG, 32825 Blomberg (DE)
(72) Erfinder: HEUTGER, Henning, 31812 Bad Pyrmont (DE); UHDE, Thorsten, 31785 Hameln (DE); OKS, Dimitri, 33813 Oerlinghausen (DE); HOLLMANN, Sascha, 32657 Lemgo (DE); BÄUNKER, Jens, 32051 Herford (DE)
(74) Vertreter: Blumbach · Zinngrebe Patentanwälte PartG mbB
(86) Internationale Anmeldenummer: PCT/EP2013/053269
(87) Internationale Veröffentlichungsnummer: WO 2013/124268

(56) Entgegenhaltungen:
- EP-A1- 1 860 564
- WO-A2-01/16749
- DE-A1-102008 020 507
- US-A1- 2008 114 872

## Beschreibung

Die Erfindung betrifft ein Verfahren zum ausfallsicheren Betreiben eines Prozesssteuersystems, insbesondere eines SCADA-Systems, ein entsprechendes Prozesssteuersystem sowie ein Computerprogramm zum Installieren auf einem Rechner eines solchen Prozesssteuersystems.

SCADA-Systeme (SCADA: Supervision, Control and Data Acquisition) sind allgemein bekannt. Sie basieren auf einer klassischen Client-Server-Anwendung und weisen hierzu sogenannte OPC-Clients und OPC-Server auf. Die OPC-Clients und OPC-Server ermöglichen eine standardisierte und offene Datenkommunikation, um beispielsweise Zugang zu Prozessdaten, auch Prozessvariablen genannt, unterlagerter Datenquellen zu erhalten. OPC ist eine Kurzbezeichnung für OLE for Process Control. Die Aufgabe eines OPC-Servers besteht unter Anderem darin, einen OPC-Client beim Lesen von Prozessvariablen, Ändern von Prozessvariablen und Überwachen von Prozessvariablen zu unterstützen. In der Regel führt der OPC-Server diese Aufgaben nach Aufforderung durch den OPC-Client aus. Ein solches SCADA-System ist beispielsweise in dem Fachbuch "Automatisieren mit SPS-Theorie und Praxis, G. Wellenreuther et al., Vieweg + Teubner, 4. Auflage, 2009" beschrieben.

Um gewährleisten zu können, dass Prozesssteuersysteme insbesondere bei der Überwachung von kritischen Zuständen, beispielsweise bei der Überwachung von Straßentunneln, zuverlässig und ausfallsicher arbeiten, werden bestimmte Systemkomponenten redundant ausgebildet.

Aus der WO 01/16749 A2 ist ein Echtzeit-Prozesssteuersystem bekannt, welches einen redundanten Kontroller aufweist, dem ein funktionaler Block bereit gestellt wird. Der redundante Kontroller weist wenigstens zwei Knoten auf, von denen einer als Hauptknoten betrieben wird. Beide Knoten enthalten jeweils einen gemeinsam genutzten Speicher, die mit einem Synchronisationsmechanismus hinsichtlich ihrer Speicherinhalte konsistent gehalten werden.

Aus der US 2005/0097165 A1 ist ein redundantes Prozesssteuersystem bekannt, welches einen OPC-Client, mehrere OPC-Server und mehrere mit den OPC-Servern verbundene Datenquellen aufweist. Um einen redundanten Betrieb zu ermöglichen, verfügt der OPC-Client über einen Redundanzmanager, der Prozessdaten von mehreren verschiedenen Datenquellen empfängt und auswertet. Die Datenquellen, welche Daten zum OPC-Client übermitteln, sind über einen oder mehrere OPC-Server mit dem OPC-Client verbunden. Bei einem weiteren bekannten redundanten Prozesssteuersystem ist wenigstens eine Datenquelle über zwei redundant betriebene OPC-Server mit dem OPC-Client verbunden. Die Auswahl eines geeigneten OPC-Servers wird wiederum vom Redundanzmanager eines OPC-Clients getroffen.

Ein ähnliches System ist aus der US 7,451,215 B2 bekannt. Das bekannte Prozesssteuersystem weist zwei redundant betriebene OPC-Server aufweist, welche als Haupt- bzw. Neben-OPC-Server fungieren. Beide OPC-Server sind mit einer Datenquelle verbunden, die für einen OPC-Client Prozessvariable zur Verfügung stellt. Die Entscheidung, welcher OPC-Server als Haupt-OPC-Server fungiert, wird vom OPC-Client getroffen.

Die bekannten Prozesssteuersysteme haben den Nachteil, dass die Erkennung einer Umschaltung zwischen den redundanten Komponenten, welche in dem OPC-Client erfolgt, und die Bereitstellung neuer Prozessvariablen einige Sekunden dauern kann. Während dieser Zeit kann das Prozesssteuersystem den auszuführenden Prozess nicht bedienen.

Der Erfindung liegt daher die Aufgabe zugrunde, ein Computerprogramm, ein Prozesssteuersystem sowie ein Verfahren zum ausfallsicheren Betreiben eines Prozesssteuersystems bereitzustellen, mit welchen die Zeit zum Umschalten zwischen redundanten Systemkomponenten und zur Wiederaufnahme der Prozesssteuerung nach einer Umschaltung im Vergleich zu den bekannten Prozesssteuereinrichtungen verkürzt werden kann. Eine weitere Aufgabe ist darin zu sehen, ein redundantes Prozesssteuersystem bereitzustellen, welches einfacher und schneller zu implementieren und zu warten ist.

Ein Kerngedanke der Erfindung ist darin zu sehen, die Redundanzverwaltung von Steuereinrichtungen nicht von einem OPC-Client, sondern von einem OPC-Server ausführen zu lassen. Dadurch wird erreicht, dass lediglich ein einziger OPC-Server in einem Prozesssteuersystem verwendet werden kann, um Prozessvariablen in redundanter Form bereitstellen zu können.

Das oben genannte technische Problem wird durch die Verfahrensschritte des Anspruchs 1 gelöst.

Danach wird ein Verfahren zum ausfallsicheren Betreiben eines Prozesssteuersystems zur Verfügung gestellt. Das Prozesssteuersystem weist wenigstens einen OPC-Client und einen OPC-Server, welche über eine standardisierte OPC-Schnittstelle kommunizieren, sowie wenigsten zwei, redundant betriebene Steuereinrichtungen auf. Die Steuereinrichtungen kommunizieren jeweils über eine Ankopplungseinrichtung mit dem OPC-Server. Die Ankopplungseinrichtungen sind in der Regel herstellerspezifische Schnittstellen.

Zunächst werden die Rollen der Steuereinrichtungen ermittelt, wobei die eine Steuereinrichtung als Hauptsteuereinrichtung und die andere Steuereinrichtung als Nebensteuereinrichtung betrieben wird. Die Hauptsteuereinrichtung ist die prozessführende Steuereinrichtung, während die Nebensteuereinrichtung beispielsweise in der Art "Hot Standby" mitläuft.

Die Rollen können beispielsweise zu Beginn einer Prozesssteuerung vom Anwender festgelegt oder automatisch unter Anwendung eines vorbestimmten Algorithmus zwischen den Steuereinrichtungen direkt ausgehandelt werden.

Von jeder Steuereinrichtung wird eine Statusinformation, welche die aktuelle Rolle der jeweiligen Steuereinrichtungen enthält, für den OPC-Server bereitgestellt. Unter Ansprechen auf die Statusinformation wenigstens einer der Steuereinrichtungen wird vom OPC-Server die Hauptsteuereinrichtung erkannt. Eine vom OPC-Client erzeugte Variablenlisten wird unter Steuerung oder Vermittlung des OPC-Servers an der Hauptsteuereinrichtung angemeldet.

Unter dem Merkmal "Anmelden einer Variablenliste" wird beispielsweise folgendes verstanden:
- Der OPC-Client fordert den OPC-Server auf, die in der Variablenliste genannten Prozessvariablen oder -daten aus der Hauptsteuereinrichtung auszulesen und an ihn zu übermitteln. Oder
- der OPC-Client fordert den OPC-Server auf, die Hauptsteuereinrichtung zu veranlassen, die in der angemeldeten Variablenliste genannten Prozessvariablen oder
- daten in einer unterlagerten E/A-Einrichtung zu ändern oder in eine E/A-Einrichtung zu schreiben.

Lediglich die Prozessvariablen, welche von der Hauptsteuereinrichtung bereitgestellt worden sind, werden unter Steuerung oder Vermittlung des OPC-Servers zum OPC-Client übertragen.

Vorteilhafte Weiterbildungen sind Gegenstand der Unteransprüche.

Um die Rechenleistung eines Rechners, auf welchem der OPC-Server installiert ist, nicht erhöhen zu müssen, fragt der OPC-Server vorteilhafter Weise nur Statusinformationen der Nebensteuereinrichtung ab, und zwar vorzugsweise zu einstellbaren Zeitpunkten. Die Hauptsteuereinrichtung wird in diesem Fall vom OPC-Server unter Ansprechen auf die Statusinformation der Nebensteuereinrichtung erkannt. Auf diese Weise wird zudem sichergestellt, dass auch bei Ausfall der Hauptsteuereinrichtung der OPC-Server eine Umschaltung von der bisherigen Hauptsteuereinrichtung auf die neue Hauptsteuereinrichtung erkennen kann.

Zweckmäßig werden die Rollen der Steuereinrichtungen in Abhängigkeit eines vorbestimmbaren Ereignisses getauscht. Ein solches Ereignis kann darin liegen, dass der Ausfall der aktuellen Hauptsteuereinrichtung erkannt wird. Weitere, einen Rollentausch herbeiführende Ereignisse können beispielsweise durch den Anwender selbst definiert werden. Solche Ereignisse können beispielsweise Zeitangaben sein.

Um ein schnelles Umschalten zwischen den Steuereinrichtungen zu ermöglichen, sorgt der OPC-Server in vorteilhafter Weise dafür, dass die vom OPC-Client erzeugte Variablenliste auf beiden Steuereinrichtungen identisch vorliegt. Demzufolge wird unter Steuerung des OPC-Servers die vom OPC-Client erzeugte Variablenliste dupliziert und anschließend auch an der Nebensteuereinrichtung angemeldet.

Je nach Implementierung des Prozesssteuersystems kann die vom OPC-Client erzeugte Variablenliste in einer zeitlichen Abfolge, und zwar zweckmäßigerweise zuerst an der Hauptsteuereinrichtung und dann an der Nebensteuereinrichtung angemeldet werden. Denkbar ist ferner, dass die Variablenliste erst dann an der Nebensteuereinrichtung angemeldet wird, wenn ausreichend Rechnerleistung vorliegt.

Um ein schnelles und sicheres Umschalten zwischen den Steuereinrichtungen zu ermöglichen, ist es ferner nützlich, dass sich die Steuereinrichtungen hinsichtlich der Prozessvariablen und/oder Statusinformationen über eine Synchronisationsverbindung synchronisieren. Die Statusinformationen können deshalb auch Angaben über eine zwischen den Steuereinrichtungen bestehende oder nicht bestehende Synchronisationsverbindung enthalten.

Um nach einer Umschaltung zwischen den Steuereinrichtungen, d.h. einem Rollentausch der Steuereinrichtungen, rasch die aktuellen Prozessvariablen zur Verfügung stellen zu können, werden im Betrieb die vom OPC-Client angeforderten Prozessvariablen unter Steuerung des OPC-Servers sowohl von der Haupt- als auch von der Nebensteuereinrichtung ausgelesen und zwischengespeichert. Damit kann der OPC-Server nach einem Umschaltprozess schnell die Prozessvariablen der neuen Hauptsteuereinrichtung dem OPC-Client zur Verfügung stellen.

Um sicherzustellen, dass auch bei Ausfall einer Synchronisationsverbindung zwischen den Steuereinrichtungen eine Hauptsteuereinrichtung zur Prozessführung zur Verfügung steht, kann der OPC-Server eine der Steuereinrichtungen als Hauptsteuereinrichtung auswählen, wenn er innerhalb einer einstellbaren Zeitspanne n-Mal einen Rollentausch erkannt hat. Diese Strategie sorgt einem Systemausfall infolge einer Unterbrechung der Synchronisationsverbindung zwischen den Steuereinrichtungen vor, und zwar dann, wenn beide Steuereinrichtungen sich als Hauptsteuereinrichtung gegenüber dem OPC-Server ausgeben.

Das obengenannte technische Problem wird ebenfalls durch die Merkmale des Anspruchs 10 gelöst.

Demnach ist ein Prozesssteuersystem mit wenigstens einem OPC-Client und einem OPC-Server vorgesehen, welche über eine standardisierte OPC-Schnittstelle kommunizieren.

Weiterhin weist das Prozesssteuersystem wenigstens zwei redundant betriebene Steuereinrichtungen auf, welche jeweils über eine Ankopplungseinrichtung mit dem OPC-Server kommunizieren. Jede Steuereinrichtung ist zum Bereitstellen von Prozessvariablen und einer Statusinformation ausgebildet. Die Statusinformation enthält die aktuelle Rolle der jeweiligen Steuereinrichtung, wobei die aktuelle Rolle entweder die einer Hauptsteuereinrichtung oder einer Nebensteuereinrichtung ist. Der OPC-Server ist dazu ausgebildet, die Hauptsteuereinrichtung unter Ansprechen auf die Statusinformation wenigstens einer der Steuereinrichtung zu erkennen, an der Hauptsteuereinrichtung eine vom OPC-Client erzeugte Variablenliste anzumelden und lediglich die Prozessvariablen, welche von der Hauptsteuereinrichtung bereitgestellt worden sind, zum OPC-Client zu übertragen. Der OPC-Client und der OPC-Server können auf einem gemeinsamen Rechner oder auf separaten Rechnern installiert sein.

Das oben genannte technische Problem wird ebenfalls durch die Merkmale des Anspruchs 12 gelöst.

Demnach ist ein Computerprogamm zum Installieren auf einen Rechner eines Prozesssteuersystems mit den redundanten Steuereinrichtungen vorgesehen. Das Computerprogramm enthält Anweisungen zum Steuern des Rechners, um die Hauptsteuereinrichtung unter Ansprechen auf die Statusinformation wenigstens einer der Steuereinrichtungen zu erkennen, an der Hauptsteuereinrichtung eine vom OPC-Client erzeugte Variablenliste anzumelden, und um lediglich die Prozessvariablen, welche von der Hauptsteuereinchtung bereitgestellt worden sind, zum OPC-Client zu übertragen.

Die Erfindung wird nachstehend anhand eines Ausführungsbeispiels in Verbindung mit einer Figur erläutert.

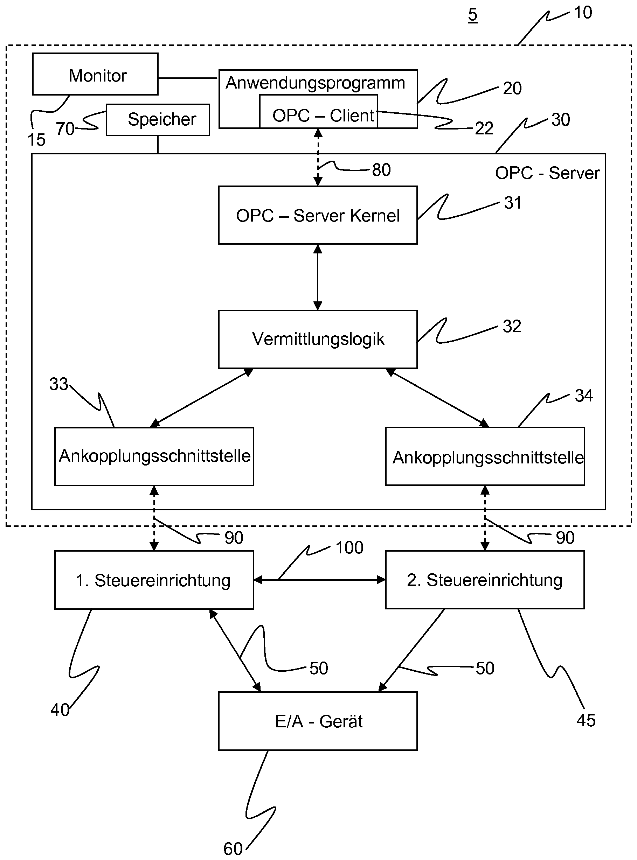

Die Figur zeigt ein beispielhaftes Prozesssteuersystem 5, welches als SCADA-System ausgebildet sein kann. Das Prozesssteuersystem 5 dient vorzugsweise dem Überwachen, Steuern und/oder Regeln eines technischen Prozesses sowie dem Austausch von Prozessvariablen.

Das beispielhafte Prozesssteuersystem 5 weist einen PC 10 auf, der einen Monitor 15 und zumindest einen Speicher 70 enthalten kann. Auf dem PC 10 ist ein OPC-fähiges Anwenderprogramm 20 installiert, welches einen herkömmlichen OPC-Client 22 enthält. Bei dem Anwenderprogramm 20 kann es sich beispielsweise um eine Visualisierungssoftware handeln. Weiterhin ist auf dem PC 10 eine OPC-Software-Komponente 30 installiert, die den OPC-Client 22 gemäß einer Client-Server-Anwendung unterstützt. Diese Softwarekomponente heißt OPC-Server. Der OPC-Server 30 weist eine standardisierte OPC-Schnittstelle 31, auch OPC-Server-Kerbnel genannt, auf, über die der OPC-Client 22 und der OPC-Server 30 Daten in standardisierter Form austauschen können. An dieser Stelle sei angemerkt, dass die OPC-Kommunikation dem Fachmann bekannt ist, sodass sie hierin nur insoweit erläutert wird, wie sie für die Erfindung von Bedeutung ist. Die Kommunikationsverbindung zwischen dem OPC-Client 22 und der OPC-Schnittstelle 31 ist in der Figur mit dem Bezugszeichen 80 versehen. Angemerkt sei an dieser Stelle, dass das Anwenderprogramm 20 mit dem OPC-Client 22 und der OPC-Server 30 auf separaten Rechnern installiert sein kann. In diesem Fall erfolgt die OPC-Kommunikation zwischen OPC-Client 22 und OPC-Server 30 beispielsweise über ein TCP/IP-basiertes Intranet des Kunden.

Wir kehren nun zur Figur zurück. Der OPC-Server 30 enthält ferner ein als Vermittlungslogik 32 bezeichnetes Softwaremodul, welches, wie nachfolgend noch näher erläutert wird, die Redundanzverwaltung und -steuerung des Prozesssteuersystems 5 ausführt. Die Vermittlungslogik 32 kann über die OPC-Schnittstelle 31 des OPC-Servers 30 mit dem OPC-Client 22 des Anwenderprogramms 20 kommunizieren. Wie in der Figur dargestellt, kann das Anwenderprogramm 20 die zu visualisierenden Daten zum Monitor 15 übertragen.

Der OPC-Server 30 kann zwei Ankopplungsmodule 33 und 34 aufweisen, über die der OPC-Server 30 mit einer ersten Steuereinrichtung 40 und einer zweiten Steuereinrichtung 45 kommunizieren kann. Die Ankopplungsschnittstelle 33 ist der ersten Steuereinrichtung 40, und die Ankopplungsschnittstelle 34 der zweiten Steuereinrichtung 45 zugeordnet. Bei den Ankopplungsmodulen oder Ankopplungsschnittstellen handelt es sich vorzugsweise um herstellerspezifische Kommunikationsschnittstellen, welche die von den Steuereinrichtungen 40 bzw. 45 kommenden Daten in ein OPC-Format umsetzen.

Die Festlegung der Steuereinrichtungen als erste Steuereinrichtung und zweite Steuereinrichtung kann vom Anwender vorgenommen und während der gesamten Prozesssteuerung beibehalten werden. Die physikalische Ankopplung der Steuereinrichtungen 40 und 45 an den PC 10 kann über ein industrielles TCP/IP-basiertes Kommunikationsnetz 90 erfolgen.

Angemerkt sei, dass der OPC-Server 30 auch mit mehr als den beiden dargestellten redundanten Steuereinrichtungen 40 und 45 kommunizieren kann. Die beiden Steuereinrichtungen 40 und 45, welche innerhalb des Prozesssteuersystems 5 redundant betrieben werden, sind im vorliegenden Beispiel, der einfacheren Erörterung wegen, nur mit einem E/A-Gerät 60 verbunden. Bei dem E/A-Gerät 60 kann es sich um einen Sensor oder einen Aktor handeln. Das E/A-Gerät 60 kann über ein TCP/IP-basiertes Netzwerk 50, zum Beispiel das Profinet 50, mit den Steuereinrichtungen 40 und 45 kommunizieren. Zwischen den beiden Steuereinrichtungen 40 und 45 kann eine Synchronisationsverbindung 100 aufgebaut werden, über welche die beiden Steuereinrichtungen Daten, z. B. Prozessvariable und Statusinformationen miteinander austauschen und abgleichen. Dem OPC-Server 30 ist der Speicher 70 zugeordnet, in welchem zum Beispiel die von den Steuereinrichtungen 40 und 45 angeforderten Prozessvariablen und Statusinformationen abgelegt werden können.

Nachfolgend wird die Funktionsweise des Prozesssteuersystems 5, insbesondere die Funktionsweise des um eine Redundanzverwaltung erweiterten OPC-Servers 30 näher erläutert.

Wie bereits erwähnt, wurden die beiden Steuereinrichtungen 40 und 45 so konfiguriert, dass die Steuereinrichtung 40 als erste Steuereinrichtung und die Steuereinrichtung 45 als zweite Steuereinrichtung im Prozesssteuersystem 5 definiert sind. Diese Einstellung bleibt in der Regel während der gesamten Prozesslaufzeit bestehen.

Weiterhin sei angenommen, dass die beiden Steuereinrichtungen 40 und 45 über die Synchronisationsverbindung 100 vor der Inbetriebnahme des Prozessteuersystems 5 ihre Rolle ausgehandelt haben. Beispielsweise wurde ausgehandelt, dass die Steuereinrichtung 40 als Hauptsteuereinrichtung und die Steuereinrichtung 45 als Nebensteuereinrichtung fungieren sollen. Als Hauptsteuereinrichtung wird die prozessführende Steuereinrichtung bezeichnet, welche, wie nachfolgend noch näher ausgeführt wird, das E/A-Gerät 60 steuert und über den OPC-Server mit dem OPC-Client 22 kommuniziert. Die Nebensteuereinrichtung ist die redundant mitlaufende Steuereinrichtung, welche auch als Ersatzsteuereinrichtung oder Backup-Steuereinrichtung bezeichnet werden kann.

Angenommen sei weiterhin, dass es sich bei dem E/A-Gerät 60 um einen Temperatursensor handelt, der zu einstellbaren Zeitpunkten seine Prozessdaten, also Temperaturwerte, an die beiden Steuereinrichtungen 40 und 45 übermittelt.

Die beiden Steuereinrichtungen 40 und 45 sind dazu ausgebildet, Statusinformationen zu erzeugen. Die Statusinformationen enthalten unter Anderem die aktuelle Rolle der jeweiligen Steuereinrichtung sowie eine Information darüber, ob eine Synchronisationsverbindung 100 zwischen den Steuereinrichtungen 40 und 45 besteht oder nicht. Im vorliegenden Beispiel enthält die Statusinformation der Steuereinrichtung 40 folgende Angaben: "Hauptsteuereinrichtung" und "Synchronisationsverbindung besteht".

Die Steuereinrichtung 45 hat folgende Statusinformation erzeugt: "Nebensteuereinrichtung" und "Synchronisationsverbindung besteht".

Alternativ ist es denkbar, dass die Rollen vor Inbetriebnahme des Prozesssteuersystems 5 durch den Anwender manuell den Steuereinrichtungen zugeordnet werden.

Wichtig ist darauf hinzuweisen, dass bei dem in der Figur dargestellten Prozesssteuersystem 5 der OPC-Client 22 davon ausgeht, dass lediglich eine einzige Steuereinrichtung vorhanden ist. Das heißt, der OPC-Client 22 weiß nicht, dass er Teil eines redundanten Prozesssteuersystems mit redundant betriebenen Steuereinrichtungen ist.

Gemäß einer bevorzugten Implementierung des Prozesssteuersystems 5 werden zunächst die Statusinformationen der Steuereinrichtungen 40 und 45 vom OPC-Server 30 ausgelesen. Unter Ansprechen auf wenigstens eine der ausgelesenen Statusinformationen erkennt die Vermittlungslogik 32, dass die Steuereinrichtung 40 aktuell die Hauptsteuereinrichtung ist, während die Steuereinrichtung 45 aktuell die Nebensteuereinrichtung ist. Aufgrund dieser Kenntnis liest die Vermittlungslogik 32 des OPC-Servers 30 nunmehr nur noch die Statusinformation der Nebensteuereinrichtung 45 zyklisch aus und speichert die Statusinformation beispielsweise im Speicher 70.

Angenommen sei nunmehr, dass das Anwendungsprogramm 20 aktuelle Prozessdaten des E/A-Geräts 60 über den OPC-Server 30 anfordern möchte. Hierzu erzeugt das Anwendungsprogramm eine entsprechende Variablenliste, die über den OPC-Client 22 zum OPC-Server 30 übermittelt wird. Der OPC-Server 30 wird durch den Empfang der einen Variablenliste aufgefordert, die entsprechenden Prozessdaten aus dem E/A-Gerät 60 auszulesen. Hierzu meldet er die Variablenliste an den beiden Steuereinrichtungen 40 und 45 an.

Die Anmeldung der Variablenliste an den Steuereinrichtungen beginnt damit, dass die vom OPC-Client 22 empfangene Variablenliste über den OPC-Server-Kernel 31 der Vermittlungslogik 32 übergeben wird, welche die Variablenliste des OPC-Client 22 dupliziert. Die verdoppelten Variablenlisten werden anschließend unter Steuerung oder Vermittlung der Vermittlungslogik 32 über die Ankopplungsschnittstellen 33 und 34 und das Kommunikationsnetz 90 sowohl zur Hauptsteuereinrichtung 40 als auch zur Nebensteuereinrichtung 45 übertragen und somit dort angemeldet.

Um einen schnellen Datenaustausch zwischen der Hauptsteuereinrichtung 40 und dem OPC-Client 22 zu ermöglichen, kann, je nach Implementierung, die Variablenliste zuerst zur Hauptsteuereinrichtung 40, und anschließend, gesteuert durch einen sogenannten Hintergrundtask, zeitlich verzögert zur Nebensteuereinrichtung 45 übertragen werden. Sowohl die Hauptsteuereinrichtung 40 als auch die Nebensteuereinrichtung 45 lesen dann die angeforderten Prozessdaten aus dem E/A-Gerät 60 aus.

Gemäß einer beispielhaften Implementierung übergeben die Hauptsteuereinrichtung 40 und die Nebensteuereinrichtung 45 zeitgleich oder zeitlich versetzt die ausgelesenen Prozessdaten des E/A-Geräts 60 der Vermittlungslogik 32 des OPC-Servers 30. Die Prozessdaten, das sind die Temperaturwerte des E/A-Geräts 60, werden vorzugsweise in einem TCP/IP-Paket von der Hauptsteuereinrichtung 40 und der Nebensteuereinrichtung 45 zur Vermittlungslogik 32 übertragen. Jedes Paket enthält die Adresse oder eine andere Identifizierung der Hauptsteuereinrichtung 40 bzw. der Nebensteuereinrichtung 45. Auf diese Weise erkennt die Vermittlungslogik 32 des OPC-Servers 30, welche Prozessdaten von der Hauptsteuereinrichtung 40 übertragen worden sind.

Die Vermittlungslogik 32 ist derart programmiert, dass sie nur die von der Hauptsteuereinrichtung 40 empfangenen Prozessdaten über den OPC-Server-Kernel 31 zum OPC-Client 22 übermittelt. Der OPC-Client 22 übergibt die empfangenen Prozessdaten dem Anwendungsprogramm 20, welches dafür sorgen kann, dass die angeforderten Prozessdaten auf dem Monitor 15 entsprechend angezeigt werden. Die von den Steuereinrichtungen 40 und 45 übermittelten Prozessdaten können in einer Nachschlagetabelle im Speicher 70 zwischengespeichert werden. Auf diese Weise wird gewährleistet, dass auch nach einem Rollentausch der Steuereinrichtungen Prozessdaten der neuen Hauptsteuereinrichtung dem Anwendungsprogramm schnell zur Verfügung gestellt werden können.

Gemäß einer weiteren beispielhaften Implementierung ist auch denkbar, dass die Vermittlungslogik 32 des OPC-Servers 30 die Prozessdaten des E/A-Geräts 60 nur von der Hauptsteuereinrichtung 40 anfordert.

Angemerkt sei noch, dass der OPC-Client 22 zu einstellbaren Zeitpunkten Prozessdaten auf die zuvor beschriebene Weise vom OPC-Server 30 anfordern kann.

Nunmehr sei angenommen, dass der OPC-Client 22 den OPC-Server 30 auffordert, zu veranlassen, dass im E/A-Gerät Prozessvariablen geändert werden. Demzufolge wird vom Anwendungsprogramm 20 eine entsprechende Variablenliste erzeugt und über den OPC-Server-Kernel 31 des OPC-Servers 30 zur Vermittlungslogik 32 übermittelt. Wiederum wird die Variablenliste in der Vermittlungslogik 32 dupliziert und anschließend über die beiden Ankopplungsschnittstellen 33 und 34 zur Hauptsteuereinrichtung 40 bzw. zur Nebensteuereinrichtung 45 übertragen. Lediglich die Hauptsteuereinrichtung 40 schreibt dann die neuen Prozessvariablen in das E/A-Gerät 60.

Während der Prozesssteuerung synchronisieren sich zu vorgegebenen Zeitpunkten die beiden Steuereinrichtungen 40 und 45, so dass nicht nur die Statusinformationen, sondern auch die vom E/A-Gerät 60 empfangenen Prozessdaten sowie die vom OPC-Client 22 kommenden Variablenlisten abgeglichen werden. Dadurch wird sichergestellt, dass immer eine eindeutige Rollenzuordnung vorliegt und bei einem Rollentausch die neue Hauptsteuereinrichtung nahezu sofort die Prozessführung übernehmen kann.

Nunmehr sei angenommen, dass in der Hauptsteuereinrichtung 40 ein Fehler aufgetreten ist, der über die Synchronisationsverbindung 100 der Nebensteuereinrichtung 45 mitgeteilt wird. Unter Ansprechen auf die Fehlerinformation erzeugt die Steuereinrichtung 45 eine Statusinformation, die die Steuereinrichtung 45 nunmehr als Hauptsteuereinrichtung ausweist. Da der OPC-Server 30 zyklisch, z. B. alle 100 Millisekunden die Statusinformation von der aktuellen Nebensteuereinrichtung 45 ausliest, wird er somit spätestens nach 100 Millisekunden durch die Statusinformation der ehemaligen Nebensteuereinrichtung 45 darüber informiert, dass die bisherige Nebensteuereinrichtung 45 nunmehr die Hauptsteuereinrichtung ist. Die Prozessführung des Prozesssteuersystems 5 kann somit nach einer kurzen Umschaltzeit fortgesetzt werden. Ein Datenaustausch findet nunmehr unter Steuerung der Vermittlungslogik 32 zwischen dem OPC-Client 22 und der neuen Hauptsteuereinrichtung 45 statt. Das bedeutet, dass eine vom OPC-Client 22 kommende Variablenliste in der Vermittlungslogik 32 des OPC-Servers 30 dupliziert und zur neuen Hauptsteuereinrichtung 45 übertragen wird, gleichgültig ob die bisherige Hauptsteuereinrichtung 40 betriebsfähig ist oder nicht. Ist die Steuereinrichtung 40 nicht mehr betriebsfähig, wird die Vermittlungslogik 32 die Statusinformation der Steuereinrichtung 40 auch nicht mehr abfragen können. Zudem sorgt die Vermittlungslogik 32 dafür, dass nur die von der neuen Hauptsteuereinrichtung 45 aus dem E/A-Gerät 60 ausgelesene Prozessdaten zum OPC-Client 22 weitergereicht werden.

Die Prozessführung kann somit schnell fortgesetzt werden, auch wenn die fehlerhafte Steuereinrichtung 40 vollständig ausgefallen ist.

Sobald die fehlerhafte Steuereinrichtung 40 ausgetauscht oder repariert worden ist, kann, je nach Implementierung, der Anwender oder das Prozesssteuersystem 5 die Steuereinrichtung 40 veranlassen, eine Statusinformation zu erzeugen, die sie als Nebensteuereinrichtung kennzeichnet. Diese Statusinformation kann anschließend während eines Abfragezyklus von der Steuereinrichtung 40 zur Vermittlungslogik 32 übertragen werden, welche unter Ansprechen auf die empfangene Statusinformation erkennt, dass die Steuereinrichtung 40 als Nebensteuereinrichtung wieder betriebsfähig ist. Ab diesem Zeitpunkt liest die Vermittlungslogik 32 die Statusinformationen wieder zyklisch nur noch von der neuen oder reparierten Nebensteuereinrichtung 40 aus. Der OPC-Server 30 und insbesondere die Vermittlungslogik 32 des OPC-Servers 30 sorgen anschließend wieder dafür, dass vom OPC-Client 22 gelieferte Variablenlisten an beide Steuereinrichtungen 40 und 45 übertragen werden, gleichgültig welche Steuereinrichtung als Hauptsteuereinrichtung fungiert.

Nunmehr sei ein besonderer Fehlerfall betrachtet, bei dem die Synchronisationsverbindung 100 zwischen den Steuereinrichtungen 40 und 45 ausgefallen oder unterbrochen ist. Da nunmehr die beiden Steuereinrichtungen 40 und 45 ihre Statusinformationen und Prozessvariablen nicht mehr miteinander abgleichen können, kann eine Situation auftreten, bei der sich beide Steuereinrichtungen als Hauptsteuereinrichtung definieren.

Da, wie bereits oben erwähnt, gemäß einer vorteilhaften Implementierung der OPC-Server 30 zyklisch nur die Statusinformationen der Nebensteuereinrichtung ausliest, erkennt die Vermittlungslogik 32 im ersten Zyklus, dass die Nebensteuereinrichtung 40 eine Statusinformation übertragen hat, welche sie nunmehr als Hauptsteuereinrichtung ausweist. Demzufolge wird die Vermittlungslogik 32 im nächsten Zyklus die scheinbar als Nebensteuereinrichtung 45 fungierende Steuereinrichtung hinsichtlich der Statusinformation abfragen. Da diese jedoch aufgrund des Ausfalls der Synchronisationsverbindung ebenfalls als Hauptsteuereinrichtung fungieren will, empfängt die Vermittlungslogik 32 eine Statusinformation von der Steuereinrichtung 45, welche anzeigt, das diese nunmehr eine Hauptsteuereinrichtung ist. Daraufhin würde die Vermittlungslogik 32 im nächsten Abfragezyklus die Steuereinrichtung 40 hinsichtlich der Statusinformation abfragen, da sie aus der von der Steuereinrichtung 45 empfangenen Statusinformation schließt, dass nunmehr die Steuereinrichtung 40 die Nebensteuereinrichtung ist. Um ein endloses Umschalten und somit einen Systemausfall zu verhindern, schaltet die Vermittlungslogik 32 innerhalb eines einstellbaren Zeitfensters nur n-Mal, beispielsweise zweimal, um und wählt dann, je nach Implementierung eine der beiden Steuereinrichtungen als Hauptsteuereinrichtung aus. Anschließend wird das Prozesssteuersystem 5, wie oben erläutert, betrieben.

Das Anwendungsprogramm 20, der OPC-Client 22 sowie der OPC-Server 30 sind im erläuterten Beispiel in dem Rechner 10 installiert. Denkbar wäre auch, das Anwendungsprogramm 20 mit dem OPC-Client 22 auf dem Rechner 10 und den OPC-Server 30 auf einem separaten Rechner zu installieren. In diesem Fall wären die beiden separaten Rechner zum Beispiel über das Intranet des Anwenders miteinander verbunden, über welches dann auch die OPC-Kommunikation zwischen dem OPC-Client 22 und dem OPC-Server 30 erfolgen würde.

Bei dem OPC-Server 30 handelt es sich um eine Softwarekomponente, welche herkömmliche standardisierte OPC-Module, wie den OPC-Server-Kernel 31 enthält. Erweitert wurde der OPC-Server um eine Vermittlungslogik 32, die den Rechner 10 derart ansteuert, dass der OPC-Server 30 die Hauptsteuereinrichtung unter Ansprechen auf die Statusinformation wenigstens einer der Steuereinrichtungen 40 und 45 erkennen kann, an der Hauptsteuereinrichtung eine vom OPC-Client 22 erzeugte Variablenliste angemeldet werden kann, und/oder lediglich die Prozessvariablen, welche von der Hauptsteuereinrichtung bereitgestellt worden sind, zum OPC-Client 22 übertragen werden können. Dadurch wird ein schnelles Umschalten von einer Steuereinrichtung auf die andere Steuereinrichtung ermöglicht.

## Patentansprüche

1. Verfahren zum ausfallsicheren Betreiben eines Prozesssteuersystems (5), wobei das Prozesssteuersystem (5) einen OPC-Server (30) und wenigstens einen OPC-Client (22), welche über eine standardisierte OPC-Schnittstelle (31) kommunizieren, sowie wenigstens zwei, redundant betriebene Steuereinrichtungen (40, 45) zur Prozessführung aufweist, welche jeweils über eine Ankopplungseinrichtung (33, 34) mit dem OPC-Server (30) kommunizieren, nach welchem
a) die Rollen der Steuereinrichtungen (40, 45) ermittelt werden, wobei die eine Steuereinrichtung (40) Hauptsteuereinrichtung und die andere Steuereinrichtung (45) als Nebensteuereinrichtung betrieben werden;
b) von jeder Steuereinrichtung (40, 45) eine Statusinformation, welche die aktuelle Rolle der jeweiligen Steuereinrichtung enthält, für den OPC-Server (30) bereitgestellt wird;
c) die Hauptsteuereinrichtung (40) vom OPC-Server (30) unter Ansprechen auf die Statusinformation wenigstens einer der Steuereinrichtungen (40, 45) erkannt wird;
d) an der Hauptsteuereinrichtung (40) eine vom OPC-Client (22) erzeugte Variablenliste mit darin genannten Prozessvariablen unter Steuerung des OPC-Servers (30, 32) angemeldet wird, wobei der OPC-Client (22) den OPC-Server (30, 32) auffordert, die in der Variablenliste genannten Prozessvariablen aus der Hauptsteuereinrichtung auszulesen und an den OPC-Client (22) zu übermitteln; und
e) unter Steuerung des OPC-Servers (30, 32) lediglich die Prozessvariablen, welche von der Hauptsteuereinrichtung (40) bereitgestellt worden sind, zum OPC-Client (22) übertragen werden.

2. Verfahren nach Anspruch 1,
**dadurch gekennzeichnet, dass**
nach Schritt b) der OPC-Server (30) nur Statusinformation der Nebensteuereinrichtung (45), und zwar zu einstellbaren Zeitpunkten, abfragt, wobei gemäß Schritt c) die Hauptsteuereinrichtung (40) vom OPC-Server (30) unter Ansprechen auf die Statusinformation der Nebensteuereinrichtung (45) erkannt wird.

3. Verfahren nach Anspruch 1 oder 2,
**dadurch gekennzeichnet, dass**
nach Schritt a) die Rollen der Steuereinrichtungen (40, 45) in Abhängigkeit eines aufgetretenen Ereignisses getauscht werden.

4. Verfahren nach einem der vorstehenden Ansprüche,
**dadurch gekennzeichnet, dass**
nach Schritt d) unter Steuerung des OPC-Servers (30, 32) die vom OPC-Client (22) erzeugte Variablenliste auch an der Nebensteuereinrichtung (45) angemeldet wird.

5. Verfahren nach Anspruch 4,
**dadurch gekennzeichnet, dass**
die Variablenliste zuerst an der Hauptsteuereinrichtung (40) angemeldet wird.

6. Verfahren nach einem der vorstehenden Ansprüche,
**dadurch gekennzeichnet, dass**
die Steuereinrichtungen (40, 45) hinsichtlich der Prozessvariablen und Statusinformationen über eine Synchronisationsverbindung (100) synchronisiert werden, wobei die Statusinformationen Angaben über eine bestehende oder nicht bestehende Synchronisationsverbindung (100) enthalten.

7. Verfahren nach einem der vorstehenden Ansprüche,
**dadurch gekennzeichnet, dass**
nach Schritt e) unter Steuerung des OPC-Servers (30) die vom OPC-Client angeforderten Prozessvariablen sowohl von der Haupt- als auch von der Nebensteuereinrichtung ausgelesen und zwischengespeichert werden.

8. Verfahren nach einem der vorstehenden Ansprüche,
**dadurch gekennzeichnet, dass**
in Schritt a) die Rollen der Steuereinrichtungen (40, 45) unter Anwendung eines vorbestimmten Algorithmus zwischen den Steuereinrichtungen (40, 45) ausgehandelt werden.

9. Verfahren nach einem der vorstehenden Ansprüche
**dadurch gekennzeichnet, dass**
der OPC-Server (30) eine der Steuereinrichtungen (40, 45) als Hauptsteuereinrichtung auswählt, wenn er innerhalb einer einstellbaren Zeitspanne n-Mal einen Rollentausch erkannt hat.

10. Prozesssteuersystem (5) mit
einem OPC-Server (30) und wenigstens einem OPC-Client (22), welche dazu ausgebildet sind, über eine standardisierte OPC-Schnittstelle (31) zu kommunizieren, wenigstens zwei, redundant betriebenen Steuereinrichtungen (40, 45) zur Prozessführung, welche jeweils dazu ausgebildet sind, über eine Ankopplungseinrichtung (33, 34) mit dem OPC-Server (30) zu kommunizieren, wobei
jede Steuereinrichtung (40, 45) zum Bereitstellen von Prozessvariablen und einer Statusinformation ausgebildet ist, welche die aktuelle Rolle der jeweiligen Steuereinrichtung enthält, wobei die aktuelle Rolle entweder die einer Hauptsteuereinrichtung oder einer Nebensteuereinrichtung ist, und wobei der OPC-Client dazu ausgebildet ist, eine Variablenliste mit darin genannten Prozessvariablen zu erzeugen und den OPC-Server aufzufordern, die in der Variablenliste genannten Prozessvariablen aus der Hauptsteuereinrichtung auszulesen und an den OPC-Client zu übermitteln, und wobei
der OPC-Server (30, 32) dazu ausgebildet ist, die Hauptsteuereinrichtung (40) unter Ansprechen auf die Statusinformation wenigstens einer der Steuereinrichtungen (40, 45) zu erkennen, an der Hauptsteuereinrichtung (40) eine vom OPC-Client (22) erzeugte Variablenliste mit darin genannten Prozessvariablen anzumelden, und
lediglich die Prozessvariablen, welche von der Hauptsteuereinrichtung (40) bereitgestellt worden sind, zum OPC-Client (22) zu übertragen.

11. Prozesssteuereinrichtung nach Anspruch 10,
**dadurch gekennzeichnet, dass**
der OPC-Client (22) und der OPC-Server (30) auf einem gemeinsamen Rechner (10 oder separaten Rechnern installiert sind.

12. Computerprogramm zum Installieren auf einem Rechner (10) eines Prozesssteuersystems (5) nach Anspruch 10 oder 11, wobei das Computerprogramm Anweisungen zum Steuern des Rechners (10) enthält, die bei Ausführung den Rechner veranlassen, ein Verfahren nach einem der Ansprüche 1 bis 9 durchzuführen, um die Hauptsteuereinrichtung unter Ansprechen auf die Statusinformation wenigstens einer der Steuereinrichtungen (40, 45) zu erkennen,
an der Hauptsteuereinrichtung (40) eine vom OPC-Client (22) erzeugte Variablenliste anzumelden, und
um lediglich die Prozessvariablen, welche von der Hauptsteuereinrichtung (40) bereitgestellt worden sind, zum OPC-Client (22) zu übertragen.

## Claims

1. Method for fail-safe operation of a process control system (5), wherein the process control system (5) has one OPC server (30) and at least one OPC client (22) which communicate via a standardized OPC interface (31), as well as at least two redundantly operated control devices (40, 45) for process management which each communicate with the OPC server (30) by means of a coupling device (33, 34), according to which
a) the roles of the control devices (40, 45) are ascertained, one control device (40) being operated as the main control device and the other control device (45) being operated as the auxiliary control device;
b) an item of status information containing the current role of the respective control device is provided for the OPC server (30) by each control device (40, 45);
c) in response to the status information of at least one of the control devices (40, 45) the main control device (40) is detected by the OPC server (30);
d) a list of variables with process variables therein generated by the OPC client (22) is registered at the main control device (40) under the control of the OPC server (30, 32), wherein the OPC client (22) requests the OPC server (30, 32) to read the process variables in the list of variables from the main control device and to transmit them to the OPC client (22); and
e) only the process variables which have been provided by the main control device (40) are transmitted to the OPC client (22) under the control of the OPC server (30, 32).

2. Method according to claim 1, **characterized in that** according to step b) the OPC server (30) requests only status information of the auxiliary control device (45) at adjustable times, wherein according to step c) in response to the status information of the auxiliary control device (45) the main control device (40) is detected by the OPC server (30).

3. Method according to claim 1 or 2, **characterized in that** according to step a) the roles of the control devices (40, 45) are interchanged as a function of an event which has occurred.

4. Method according to one of the preceding claims, **characterized in that** according to step d) the list of variables generated by the OPC client (22) is also registered at the auxiliary control device (45) under the control of the OPC server (30, 32).

5. Method according to claim 4, **characterized in that** the list of variables is first of all registered at the main control device (40).

6. Method according to one of the preceding claims, **characterized in that** the control devices (40, 45) are synchronized with regard to the process variables and status information by means of a synchronization link (100), wherein the status information contains details about the presence or absence of a synchronization link (100).

7. Method according to one of the preceding claims, **characterized in that** according to step e) the process variables requested by the OPC client (22) are read and buffered by both the main and also the auxiliary control devices under the control of the OPC server (30).

8. Method according to one of the preceding claims, **characterized in that** in step a) the roles of the control device (40, 45) are negotiated between the control devices (40, 45) using a predetermined algorithm.

9. Method according to one of the preceding claims, **characterized in that** the OPC server (30) selects one of the control devices (40, 45) as a main control device if it has detected a change of roles n times within an adjustable time period.

10. Process control system (5) with one OPC server (30) and at least one OPC client (22) which are adapted to communicate via a standardized OPC interface (31), at least two redundantly operated control devices (40, 45) for process management which each are adapted to communicate with the OPC server (30) by means of a coupling device (33, 34), wherein each control device (40, 45) is designed to provide process variables and status information which includes the current role of the respective control device, wherein the current role is either that of a main control device or an auxiliary control device, and wherein the OPC client is adapted to generate a list of variables with process variables therein and to request the OPC server to read the process variables in the list of variables from the main control device and to transmit them to the OPC client (22), and wherein the OPC server (30. 32) is designed to detect the main control device (40) in response to the status information of at least one of the control devices (40, 45), to register a list of variables with process variables therein generated by the OPC client (22) at the main control device (40) and to transmit to the OPC client (22) only the process variables which have been provided by the main control device (40).

11. Process control device according to claim 10, **characterized in that** the OPC client (22) and the OPC server (30) are installed on a common computer (10) or separate computers.

12. Computer program for installation on a computer (10) of a process control system (5) according to claim 10 or 11, wherein the computer program contains instructions for controlling the computer (10), which on execution cause the computer (10) to perform a method according to one of claims 1 to 9, in order to detect the main control device in response to the status information of at least one of the control devices (40, 45), to register a list of variables generated by the OPC client (22) at the main control device (40) and to transmit to the OPC client (22) only the process variables which have been provided by the main control device (40).

## Revendications

1. Procédé permettant un fonctionnement à sécurité intégrée d'un système de commande de processus (5), dans lequel le système de commande de processus (5) présente un serveur OPC (30) et au moins un client OPC (22), lesquels communiquent par l'intermédiaire d'une interface OPC (31) standardisée, ainsi qu'au moins deux dispositifs de commande (40, 45) à fonctionnement redondant aux fins de pilotage de processus, lesquels communiquent avec le serveur OPC (30) respectivement par l'intermédiaire d'un dispositif de couplage (33, 34), selon lequel
a) les rôles des dispositifs de commande (40, 45) sont déterminés, où l'un des dispositifs de commande (40) fonctionne en tant que dispositif de commande principal et l'autre dispositif de commande (45) en tant que dispositif de commande secondaire ;
b) une information de statut, laquelle contient le rôle actuel du dispositif de commande respectif, est fournie par chaque dispositif de commande (40, 45) pour le serveur OPC (30) ;
c) le dispositif de commande principal (40) est reconnu par le serveur OPC (30) en réaction à l'information de statut au moins d'un des dispositifs de commande (40, 45) ;
d) une liste de variables produite par le client OPC (22), avec des variables de processus citées dans celle-ci, est annoncée au dispositif de commande principal (40) par commande du serveur OPC (30, 32), où le client OPC (22) invite le serveur OPC (30, 32) à extraire du dispositif de commande principal les variables de processus citées dans la liste de variables et à les transmettre au client OPC (22) ; et
e) par commande du serveur OPC (30, 32), seules les variables de processus qui ont été fournies par le dispositif de commande principal (40) sont transmises au client OPC (22).

2. Procédé selon la revendication 1, **caractérisé en ce que**
après l'étape b), le serveur OPC (30) n'interroge que l'information de statut du dispositif de commande secondaire (45), et ce à des instants réglables, où selon l'étape c), le dispositif de commande principal (40) est reconnu par le serveur OPC (30) en réaction à l'information de statut du dispositif de commande secondaire (45).

3. Procédé selon la revendication 1 ou 2, **caractérisé en ce que**
après l'étape a), les rôles des dispositifs de commande (40, 45) sont échangés en fonction d'un événement survenu.

4. Procédé selon l'une quelconque des revendications précédentes, **caractérisé en ce que**
après l'étape d), par commande du serveur OPC (30, 32), la liste de variables produite par le client OPC (22) est également annoncée au dispositif de commande secondaire (45).

5. Procédé selon la revendication 4, **caractérisé en ce que**
la liste de variables est tout d'abord annoncée au dispositif de commande principal (40).

6. Procédé selon l'une quelconque des revendications précédentes, **caractérisé en ce que**
les dispositifs de commande (40, 45) sont synchronisés en ce qui concerne les variables de processus et les informations de statut par l'intermédiaire d'une liaison de synchronisation (100), où les informations de statut contiennent des indications concernant une liaison de synchronisation (100) présente ou non présente.

7. Procédé selon l'une quelconque des revendications précédentes, **caractérisé en ce que**
après l'étape e), par commande du serveur OPC (30), les variables de processus demandées par le client OPC sont extraites aussi bien par le dispositif de commande principal que par le dispositif de commande secondaire et stockées temporairement.

8. Procédé selon l'une quelconque des revendications précédentes, **caractérisé en ce que**
à l'étape a), les rôles des dispositifs de commande (40, 45) sont convenus entre les dispositifs de commande (40, 45) au moyen d'un algorithme prédéfini.

9. Procédé selon l'une quelconque des revendications précédentes, **caractérisé en ce que**
le serveur OPC (30) sélectionne un des dispositifs de commande (40, 45) en tant que dispositif de commande principal, lorsqu'il a reconnu n fois un échange de rôles pendant un laps de temps réglable.

10. Système de commande de processus (5) avec
un serveur OPC (30) et au moins un client OPC (22), lesquels sont conçus pour communiquer par l'intermédiaire d'une interface OPC (31) standardisée, au moins deux dispositifs de commande (40, 45) à fonctionnement redondant aux fins de pilotage de processus, lesquels sont conçus respectivement pour communiquer avec le serveur OPC (30) respectivement par l'intermédiaire d'un dispositif de couplage (33, 34), où
chaque dispositif de commande (40, 45) est conçu pour fournir des variables de processus et une information de statut, laquelle contient le rôle actuel du dispositif de commande respectif, où le rôle actuel est soit celui d'un dispositif de commande principal soit d'un dispositif de commande secondaire, et où le client OPC est conçu pour produire une liste de variables avec des variables de processus qui y sont citées et pour inviter le serveur OPC à extraire du dispositif de commande principal les variables de processus citées dans la liste de variables et à les transmettre au client OPC, et où
le serveur OPC (30, 32) est conçu pour reconnaître le dispositif de commande principal (40) en réaction à l'information de statut au moins d'un des dispositifs de commande (40, 45), annoncer au dispositif de commande principal (40) une liste de variables produite par le client OPC (22) avec des variables de processus qui y sont citées, et transmettre au client OPC (22) uniquement les variables de processus qui ont été fournies par le dispositif de commande principal (40).

11. Dispositif de commande de processus selon la revendication 10, **caractérisé en ce que**
le client OPC (22) et le serveur OPC (30) sont installés sur un ordinateur (10) commun ou des ordinateurs séparés.

12. Programme informatique destiné à être installé sur un ordinateur (10) d'un système de commande de processus (5) selon la revendication 10 ou 11, où le programme informatique contient des instructions pour la commande de l'ordinateur (10), qui, lors de leur exécution, amènent l'ordinateur à mettre en œuvre un procédé selon l'une des revendications 1 à 9, afin de reconnaître le dispositif de commande principal en réaction à l'information de statut au moins d'un des dispositifs de commande (40, 45), d'annoncer au dispositif de commande principal (40) une liste de variables produite par le client OPC (22), et de transmettre au client OPC (22) uniquement les variables de processus qui ont été fournies par le dispositif de commande principal (40).
